# EUROPÄISCHE PATENTSCHRIFT

(11) **EP 0 400 282 B1**
(45) Veröffentlichungstag und Bekanntmachung des Hinweises auf die Patenterteilung: **18.01.1995**
(21) Anmeldenummer: 90104578.1
(22) Anmeldetag: 10.03.1990
(51) Int. Cl.: H04N 5/91, H04N 9/79

(54) **Videomagnetbandgerät zur Fernsehsignalaufzeichnung**
Magnetic videotape device for the recording of television signals
Dispositif vidéo à bande magnétique pour l'enregistrement de signal de télévision

(30) Priorität: 31.05.1989 DE 3917633
(43) Veröffentlichungstag der Anmeldung: 05.12.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Obremski, Michael, Grundig E.M.V., Max Grundig, D-8510 Fürth/Bay (DE)

(56) Entgegenhaltungen:
- EP-A- 0 177 235
- US-A- 4 641 201
- FUNKSCHAU. no. 25, 1987, MUNCHEN DE Seiten 42 - 46; "Losgelöst von Normen"
- PATENT ABSTRACTS OF JAPAN vol. 10, no. 231 (E-422)(2269) 25 Juli 1986, & JP-A-61 052081

## Beschreibung

Die Erfindung betrifft ein Videomagnetbandgerät zur Aufzeichnung von Basisband-Fernsehsignalen mit den im Oberbegriff des Anspruchs 1 angegebenen Merkmalen. Ferner betrifft die Erfindung ein Videomagnetbandgerät zur Wiedergabe von Fernsehsignalaufzeichnungen mit den im Oberbegriff des Anspruchs 5 angegebenen Merkmalen.

Aus der Zeitschrift "Funkschau", 1987, Heft 25, S. 42-46, ist ein Magnetbandgerät zur Aufzeichnung von Satelliten-Farbfernsehsignalen bekannt, deren einzelne Komponenten im Zeitmultiplex übertragen werden. Die Aufzeichnung dieses Satelliten-Farbfernsehsignals erfolgt transparent, d.h. ohne vorherige Decodierung des ankommenden Signals und damit ohne eine Zerlegung des Signals in seine Einzelkomponenten. Das ankommende Signal wird zunächst analog/digital-gewandelt. Die einzelnen Zeilen des digitalen Signals werden unter Verwendung eines Multiplexers auf zwei Aufzeichnungskanäle verteilt. In jedem der Aufzeichnungskanäle erfolgt eine Zeitexpansion, die Eintastung eines Synchronsignals, eine Digital-/Analogwandlung, eine Vorverzerrung (Preemphase) und eine Frequenzmodulation. Das frequenzmodulierte Signal wird schließlich mittels einer Magnetkopfeinheit aufgezeichnet.

Bei der genannten Vorverzerrung handelt es sich um eine Kombination aus einer linearen und einer nichtlinearen Vorverzerrung, durch die die höherfrequenten Signalanteile einer amplitudenabhängigen Anhebung unterworfen werden. Diese nichtlineare Vorverzerrung bewirkt in Zusammenarbeit mit einer wiedergabeseitigen Nachentzerrung eine Verbesserung des Störabstandes des Fernsehsignals. Die Vorteile der Verwendung einer nichtlinearen Vorverzerrung bestehen insbesondere darin, daß bei Signalsprüngen keine nennenswerten Überschwinger und damit bei der nachfolgenden Frequenzmodulation keine Übermodulationen (Überhub) entstehen, welche wegen des Band/Kopf-Frequenzgangs (starker Abfall im Bereich höherer Frequenzen / kürzerer Wellenlängen auf dem Band) im wiedergegebenen Bild zu schwarzen Ausrissen führen würden.

Aus dem vom Vogel-Verlag im Jahr 1982 herausgegebenen Buch "Videorecorder-Technik", S. 137-148, sind in den Abschnitten 6.2, 6.3 und 6.6 Schaltungsbeispiele für eine lineare und eine nichtlineare Vorverzerrung, für eine Klemmschaltung zur Klemmung des Fernsehsignals auf einen Bezugspegel, für eine Frequenzmodulation und eine Frequenzdemodulation aufgezeigt.

Die Aufgabe der Erfindung besteht darin, ein Videomagnetbandgerät mit den im Oberbegriff des Anspruchs 1 angegebenen Merkmalen derart weiterzubilden, daß auch bei einer Aufzeichnung eines codierten Farbfernsehsignals ein hoher Störabstand gewährleistet werden kann.

Die Aufgabe wird bei einem Videomagnetbandgerät mit den im Oberbegriff des Anspruchs 1 angegebenen Merkmalen durch die im kennzeichnenden Teil des Anspruchs 1 angegebenen Merkmale gelöst.

Vorteilhafte Ausgestaltungen des beanspruchten Videomagnetbandgerätes sind in den Ansprüchen 2-4 beschrieben. Die Ansprüche 5-6 betreffen ein Videomagnetbandgerät zur Wiedergabe eines nach einem oder mehreren der Ansprüche 1-4 aufgezeichneten Fernsehsignals.

Die Vorteile der Erfindung bestehen insbesondere darin, daß bei der Aufzeichnung von codierten Farbfernsehsignalen durch die Umgehung des nichtlinearen Teils der Vorverzerrung und die Klemmung des Fernsehsignals auf einen zweiten Bezugspegel, welcher niedriger ist als der bei der Aufzeichnung von Basisband-Fernsehsignalen wirksame Bezugspegel, der bei der Frequenzmodulation infolge der linearen Vorverzerrung entstehende Überhub nicht mit Rücksicht auf den Band/Kopf-Frequenzgang begrenzt werden muß. Weitere Vorteile der Erfindung ergeben sich aus der Erläuterung eines Ausführungsbeispiels anhand der Figuren.

Es zeigt
- Figur 1 ein Blockschaltbild zur Erläuterung der aufzeichnungsseitigen Signalverarbeitung, und
- Figur 2 ein Blockschaltbild zur Erläuterung der wiedergabeseitigen Signalverarbeitung.

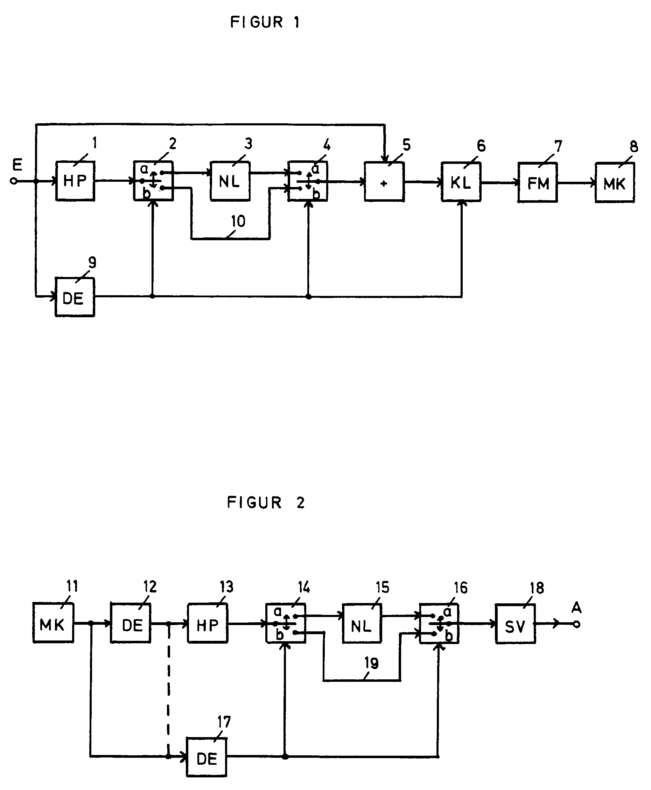

Die Figur 1 zeigt ein Blockschaltbild zur Erläuterung der aufzeichnungsseitigen Signalverarbeitung. Am Eingang E der Schaltung liegt ein Farbfernsehsignal an. Bei diesem Farbfernsehsignal handelt es sich um ein Basisband-Satellitenfernsehsignal (z.B. D2-MAC) oder um ein über Satellit übertragenes (z.B. PAL-) codiertes Farbfernsehsignal.

Dieses Farbfernsehsignal wird einer Detektorschaltung 9 zugeführt, die erkennt, ob das am Eingang E anliegende Signal ein Basisband-Fernsehsignal oder codiertes Farbfernsehsignal ist. Als Erkennkriterium verwendet die Detektorschaltung 9 das Vorhandensein oder Fehlen eines zusammen mit dem Fernsehsignal übertragenen Datenpakets, so z.B. das Vorhandensein oder Fehlen eines Farbsynchronsignals oder eines im Zeitmultiplex mit der Bildinformation übertragenen Ton/Daten-Blocks.

Handelt es sich beim Eingangssignal um ein Basisband-Fernsehsignal, dann steuert das Ausgangssignal des Detektors 9 Schalter 2 und 4 jeweils in die Schaltstellung a. Ferner steuert das Ausgangssignal des Detektors 9 eine Klemmschaltung 6 derart an, daß das Fernsehsignal auf einen ersten Bezugspegel geklemmt wird.

Folglich werden aus dem am Eingang E anliegenden Basisband-Fernsehsignal in einem Hochpaß 1 die hochfrequenten Anteile abgetrennt. Diese hochfrequenten Signalanteile werden über den Schalter 2 einem Schaltungsteil 3 zur pegelabhängigen Verstärkungsregelung zugeführt, was einer nichtlinearen Vorverzerrung entspricht. Das Ausgangssignal des Schaltungsteils 3 wird über den Schalter 4 einem Addierer 5 zugeführt und dort zum Eingangssignal addiert. Die alleine durch den Hochpaß 1 und den Addierer 5 erzielte Wirkung ist eine lineare Vorverzerrung des Signals. Das Ausgangssignal des Addierers 5 wird einer Klemmschaltung 6 zugeführt, deren Ausgangssignal in einem Frequenzmodulator 7 frequenzmoduliert und dann einer Magnetkopfeinheit 8 zur Aufzeichnung auf ein Magnetband zugeführt wird. Durch die pegelabhängige Verstärkungsregelung (nichtlineare Vorverzerrung) wird vermieden, daß hochfrequente Signalanteile den Normpegel wesentlich überschreiten.

Der Hubbereich ist durch die Klemmung des Fernsehsignals auf den genannten ersten Bezugspegel derart festgelegt, daß die dem Weißwert entsprechende Frequenz knapp unterhalb des steilen Abfalls des Band/Kopf-Frequenzgangs liegt.

Handelt es sich beim Eingangssignal hingegen um ein codiertes Farbfernsehsignal, dann steuert das Ausgangssignal des Detektors 9 die Schalter 2 und 4 jeweils in die Schaltstellung b. Ferner steuert das Ausgangssignal des Detektors 9 die Klemmschaltung 6 derart an, daß das Fernsehsignal auf einen zweiten Bezugspegel geklemmt wird, welcher kleiner ist als der erste Bezugspegel.

Folglich werden aus dem am Eingang E anliegenden (PAL-) codierten Farbfernsehsignal im Hochpaß 1 die hochfrequenten Anteile abgetrennt. Diese hochfrequenten Signalanteile werden unter Umgehung der nichtlinearen Vorverzerrungsstufe 3 über den Schalter 2, den Signalweg 10 und den Schalter 4 der Addierstufe 5 zugeführt und dort zum Eingangssignal addiert. Das Ausgangssignal der Addierstufe 5 wird an die Klemmschaltung 6 weitergeleitet und dort auf den zweiten Bezugspegel geklemmt. Das Ausgangssignal der Klemmschaltung 6 wird im Frequenzmodulator 7 frequenzmoduliert und dann der Magnetkopfeinheit 8 zur Aufzeichnung auf das Magnetband zugeführt.

Der durch die Klemmung des Signals auf den zweiten Bezugspegel festgelegte Hubbereich liegt beispielsweise um den Betrag des Hubbereiches niedriger als der obengenannte erste Hubbereich. Damit bleibt für die Pegelspitzen, die durch die lineare Vorverzerrung bedingt sind, genügend Raum bis zum kritischen Punkt des Band/Kopf-Frequenzgangs.

Zusammenfassend betrachtet werden beim beanspruchten Videomagnetbandgerät die hohen Signalfrequenzen eines codierten Farbfernsehsignals lediglich einer linearen Vorverzerrung unterworfen, da die Wirksamkeit einer nichtlinearen Vorverzerrung für die einem hochfrequenten Träger aufmodulierte Farbinformation stark eingeschränkt wäre.

Die Figur 2 zeigt ein Blockschaltbild zur Erläuterung der wiedergabeseitigen Signalverarbeitung. Das von der Magnetkopfeinheit 11 wiedergegebene Farbfernsehsignal wird einer Detektorschaltung 17 zugeführt, die erkennt, ob das wiedergegebene Signal ein frequenzmoduliertes Basisband-Fernsehsignal oder ein frequenzmoduliertes codiertes Farbfernsehsignal ist. Als Erkennkriterium verwendet die Detektorschaltung 17 die Frequenzlage der wiedergegebenen Synchronimpulse. Hierzu weist die Detektorschaltung 17 beispielsweise ein (nicht gezeichnetes) Bandpaßfilter auf, dessen Durchlaßbereich bei der dem Synchronboden entsprechenden Frequenz liegt. Handelt es sich bei wiedergegebenen Signal um ein frequenzmoduliertes Basisband-Fernsehsignal, dann steuert das Ausgangssignal des Detektors 17 Schalter 14 und 16 jeweils in die Schaltstellung a. Folglich wird das wiedergegebene Signal zunächst im FM-Demodulator 12 demoduliert. Aus dem demodulierten Signal werden im Hochpaß 13 die hochfrequenten Anteile abgetrennt, was einer linearen Nachentzerrung entspricht, und über den Schalter 14 einem Schaltungsteil 15 zur pegelabhängigen Verstärkungsregelung zugeführt, die einer nichtlinearen Nachentzerrung entspricht. Das nichtlinear nachentzerrte Signal wird über den Schalter 16 einer Schaltung 18 zur weiteren Signalverarbeitung zugeleitet und dann an den Ausgang A der Schaltung weitergegeben.

Handelt es sich beim wiedergegebenen Signal hingegen um ein frequenzmoduliertes codiertes Farbfernsehsignal, dann steuert das Ausgangssignal des Detektors 17 die Schalter 14 und 16 jeweils in die Schaltstellung b. Folglich wird das wiedergegebene Signal zunächst im FM-Demodulator 12 demoduliert, im Hochpaß 13 einer linearen Nachentzerrung unterworfen und dann unter Umgehung einer nichtlinearen Nachentzerrung über den Schalter 14, den Signalweg 19 und den Schalter 16 unmittelbar der Schaltung 18 zur weiteren Signalverarbeitung zugeführt, deren Ausgangssignal an den Ausgang A der Schaltung weitergegeben wird.

Alternativ zur oben beschriebenen Möglichkeit, das wiedergegebene frequenzmodulierte Signal auszuwerten, um zu erkennen, ob das wiedergegebene Signal ein frequenzmoduliertes Basisband-Fernsehsignal oder ein frequenzmoduliertes codiertes Farbfernsehsignal ist, kann auch das demodulierte Signal zur genannten Erkennung verwendet werden, wie es durch die gestrichelte Linie angedeutet ist.

## Patentansprüche

1. Videomagnetbandgerät zur Aufzeichnung von Basisband-Fernsehsignalen, mit
- einem ersten Schaltungsteil (1,5) zur linearen Vorverzerrung der höherfrequenten Anteile des Fernsehsignals,
- einem zweiten Schaltungsteil (3) zur nichtlinearen Vorverzerrung der höherfrequenten Anteile des Fernsehsignals,
- einer Klemmschaltung (6) zur Klemmung des Fernsehsignals auf einen ersten Bezugspegel,
- einem Frequenzmodulator (7) zur Modulation eines Trägersignals mit dem Fernsehsignal, und
- einer Magnetkopfeinheit (8) zur magnetischen Aufzeichnung des frequenzmodulierten Fernsehsignals,
**dadurch gekennzeichnet**, daß zur Aufzeichnung eines codierten Farbfernsehsignals eine Detektorschaltung (9) vorgesehen ist, die erkennt, ob ein Basisband-Fernsehsignal oder ein codiertes Farbfernsehsignal vorliegt, daß die Detektorschaltung (9) bei Vorliegen eines codierten Farbfernsehsignals die Zuführung des Farbfernsehsignals zu einem Signalweg (10) initiiert, über welchen das Farbfernsehsignal zur Umgehung des zweiten Schaltungsteils (3) zur nichtlinearen Vorverzerrung geleitet wird, und daß die Detektorschaltung (9) bei Vorliegen eines codierten Farbfernsehsignals die Klemmschaltung (6) derart ansteuert, daß das codierte Farbfernsehsignal auf einen zweiten Bezugspegel geklemmt wird, welcher einer niedrigeren Momentanfrequenz des frequenzmodulierten Signals entspricht als der erste Bezugspegel.

2. Videomagnetbandgerät nach Anspruch 1,
**dadurch gekennzeichnet**, daß die Detektorschaltung (9) als Erkennkriterium das Vorhandensein oder Fehlen eines zusammen mit dem Farbfernsehsignal übertragenen Datenpakets verwendet.

3. Videomagnetbandgerät nach Anspruch 2,
**dadurch gekennzeichnet**, daß das Datenpaket das Farbsynchronsignal eines codierten Farbfernsehsignals ist.

4. Videomagnetbandgerät nach Anspruch 2,
**dadurch gekennzeichnet**, daß das Datenpaket das innerhalb eines Satelliten-Fernsehsignals im Zeitmultiplex mit der Bildinformation übertragene Datenpaket ist.

5. Videomagnetbandgerät zur Wiedergabe eines nach einem oder mehreren der Ansprüche 1-4 aufgezeichneten Fernsehsignals, mit
- einer Magnetkopfeinheit (11) zur Wiedergabe des frequenzmodulierten Fernsehsignals,
- einem Frequenzdemodulator (12) zur Demodulation des wiedergegebenen frequenzmodulierten Fernsehsignals,
- einem dritten Schaltungsteil (15) zur nichtlinearen Nachentzerrung der höherfrequenten Anteile des demodulierten Fernsehsignals, und
- einem vierten Schaltungsteil (18) zur linearen Nachentzerrung der höherfrequenten Anteile des Fernsehsignals,
**dadurch gekennzeichnet**, daß eine Detektorschaltung (17) vorgesehen ist, die erkennt, ob das wiedergegebene Fernsehsignal ein frequenzmoduliertes Basisband-Fernsehsignal oder ein frequenzmoduliertes codiertes Farbfernsehsignal ist, und daß die Detektorschaltung (17) bei Vorliegen eines codierten Farbfernsehsignals die Zuführung des demodulierten Farbfernsehsignals zu einem Signalweg (19) initiiert, über welchen das demodulierte Farbfernsehsignal zur Umgehung des dritten Schaltungsteils (15) zur nichtlinearen Nachentzerrung geleitet wird.

6. Videomagnetbandgerät nach Anspruch 5,
**dadurch gekennzeichnet**, daß die Detektorschaltung (17) als Erkennkriterium die Frequenzlage der Synchronimpulse auswertet.

## Claims

1. Video magnetic tape recorder for recording base-band television signals, comprising
- a first circuit section (1, 5) for the linear preemphasis of the higher-frequency components of the television signal,
- a second circuit section (3) for the nonlinear preemphasis of the higher-frequency components of the television signal,
- a clamping circuit (6) for clamping the television signal to a first reference level,
- a frequency modulator (7) for modulating a carrier signal with the television signal, and
- a magnetic head unit (8) for the magnetic recording of frequency-rnodulated television signals,
characterized in that, to record a coded colour television signal, a detector circuit (9) is provided which detects whether a base-band television signal or a coded colour television signal is present, in that, if a coded colour television signal is present, the detector circuit (9) initiates the feeding of the colour television signal to a signal path (10), via which the colour television signal is conveyed in order to bypass the second circuit section (3) for nonlinear pre-emphasis, and in that, if a coded colour television signal is present, the detector circuit (9) drives the clamping circuit (6) in such a way that the coded colour television signal is clamped to a second reference level corresponding to a lower instantaneous frequency of the frequency-modulated signal than the first reference level.

2. Video magnetic tape recorder according to Claim 1, characterized in that the detector circuit (9) uses the presence or absence of a data packet transmitted together with the colour television signal as detection criterion.

3. Video magnetic tape recorder according to Claim 2, characterized in that the data packet is the colour burst of a coded colcur television signal.

4. Video magnetic tape recorder according to Claim 2, characterized in that the data packet is the data packet transmitted within a satellite television signal in time-division multiplex with the video information.

5. Video magnetic tape recorder fcr playing back a television signal recorded according to one or more of Claims 1-4, comprising
- a magnetic head unit (11) for playing back the frequency modulated television signal,
- a frequency demodulator (12) for demodulating the played-back frequency-modulated television signal,
- a third circuit section (15) for the nonlinear deemphasis of the higher-frequency components of the demodulated television signal, and
- a fourth circuit section (18) for the linear deemphasis of the higher-frequency components of the television signal,
characterized in that a detector circuit (17) is provided which detects whether the television signal played back is a frequency-modulated base-band television signal or a frequency-modulated coded colour television signal, and in that, if a coded colour television signal is present, the detector circuit (17) initiates the feeding of the demodulated colcur television signal to signal path (19), via which the demodulated colour television signal is conveyed in order to bypass the third circuit section (15) for nonlinear de-emphasis.

6. Video magnetic tape recorder according to Claim 5, characterized in that the detector circuit (17) evaluates the frequency position of the synchronizing pulses as detection criterion.

## Revendications

1. Appareil à bande vidéo magnétique pour l'enregistrement de signaux de télévision dans la bande de base, comportant
- une première partie de circuit (1,5) pour réaliser la prédistorsion linéaire des composantes à fréquences supérieures du signal de télévision,
- une seconde partie de circuit (3) pour réaliser la prédistorsion non linéaire des composantes à fréquences supérieures du signal de télévision,
- un circuit de verrouillage (6) pour verrouiller le signal de télévision sur un premier niveau de référence,
- un modulateur de fréquence (7) pour moduler un signal de porteuse au moyen du signal de télévision, et
- une unité à tête magnétique (8) pour enregistrer magnétiquement le signal de télévision modulé en fréquence,
caractérisé en ce que pour l'enregistrement d'un signal de télévision couleur codé, il est prévu un circuit détecteur (9), qui identifie si un signal de télévision dans la bande de base ou un signal de télévision couleur codé est présent, que dans le cas de la présence d'un signal de télévision codé, le circuit détecteur (9) déclenche l'envoi du signal de télévision couleur à une voie de transmission de signaux (10), dans laquelle le signal de télévision couleur est transmis de manière à contourner la seconde partie de circuit (3) servant à réaliser la prédistorsion non linéaire, et que, dans le cas de la présence d'un signal de télévision couleur codé, le circuit détecteur (9) commande le circuit de verrouillage (6) de telle sorte que le signal de télévision couleur codé est verrouillé sur un second niveau de référence, qui correspond à une fréquence instantanée du signal modulé en fréquence, inférieure au premier niveau de référence.

2. Système à bande magnétique vidéo selon la revendication 1, caractérisé en ce que le circuit détecteur (9) utilise, comme critère d'identification, la présence ou l'absence d'un paquet de données transmis conjointement avec le signal de télévision couleur.

3. Appareil à bande magnétique vidéo selon la revendication 2, caractérisé en ce que le paquet de données est le signal de synchronisation de chrominance d'un signal de télévision couleur codé.

4. Appareil à bande magnétique vidéo selon la revendication 2, caractérisé en ce que le paquet de données est le paquet de données transmis en multiplex temporel avec l'information d'image à l'intérieur d'un signal de télévision transmis par satellite.

5. Appareil à bande magnétique vidéo pour la reproduction d'un signal de télévision enregistré selon une ou plusieurs des revendications 1-4, comportant
- une unité de tête magnétique (11) servant à reproduire le signal de télévision modulé en fréquence,
- un démodulateur de fréquence (12) pour démoduler le signal de télévision reproduit, modulé en fréquence,
- une troisième partie de circuit (15) servant à réaliser la post-correction de distorsion non linéaire des composantes à fréquences supérieures du signal de télévision démodulé, et
- une quatrième partie de circuit (18) pour réaliser la post-correction de distorsion linéaire des composantes à fréquences supérieures du signal de télévision,
caractérisé en ce qu'il est prévu un circuit détecteur (17), qui identifie si le signal de télévision reproduit est un signal de télévision dans la borne de base, modulé en fréquence, ou un signal de télévision couleur codé, modulé en fréquence, et que dans le cas de la présence d'un signal de télévision couleur codé, le circuit détecteur (17) déclenche l'envoi du signal de télévision couleur démodulé à une voie de transmission de signaux (19), dans laquelle le signal de télévision couleur démodulé est envoyé de manière à contourner la troisième partie de circuit (15) servant à réaliser la post-correction de distorsion non linéaire.

6. Appareil à bande magnétique vidéo selon la revendication 5, caractérisé en ce que le circuit détecteur (17) évalue, en tant que critère d'identification, la position de fréquence de l'impulsion de synchronisation.
